Europäisches Patentamt

(19) European Patent Office

Office européen des brevets

(11) EP 0 890 390 A1

(12) EUROPEAN PATENT APPLICATION

(43) Date of publication:
13.01.1999 Bulletin 1999/02

(21) Application number: 98112887.9

(22) Date of filing: 10.07.1998

(51) Int. Cl.$^6$: B01J 8/24, C08F 2/00,
C08F 2/34, C08F 10/00,
G05D 7/00

(84) Designated Contracting States:
AT BE CH CY DE DK ES FI FR GB GR IE IT LI LU
MC NL PT SE
Designated Extension States:
AL LT LV MK RO SI

(30) Priority: 10.07.1997 JP 184913/97

(71) Applicant:
MITSUI CHEMICALS, INC.
Tokyo (JP)

(72) Inventors:
• Hattori, Fumio
Ichihara-shi, Chiba-ken (JP)

• Mizuochi, Hiroyuki
Ichihara-shi, Chiba-ken (JP)
• Kikuchi, Yoshiaki
Ichihara-shi, Chiba-ken (JP)
• Yamamoto, Ryouichi
Ichihara-shi, Chiba-ken (JP)
• Doi, Kenji
Ichihara-shi, Chiba-ken (JP)

(74) Representative:
Hansen, Bernd, Dr. Dipl.-Chem. et al
Hoffmann Eitle,
Patent- und Rechtsanwälte,
Arabellastrasse 4
81925 München (DE)

(54) **Method for controlling gas-velocity in gas-phase polymerization vessel and process for gas-phase polymerization**

(57)     In a gas-phase polymerization apparatus for olefins having a polymerization equipment for olefins using a gas-phase polymerization vessel of fluid layer type in which gas-phase polymerization is carried out with a solid catalyst component, a circulation line in which a polymerization component-containing gas taken out from a velocity-reduction region positioned in an upper portion of the gas-phase polymerization vessel of fluid layer type is turned back to the gas-phase polymerization vessel of fluid layer type to be circulated so as to be a circulating-gas, and a feeding line for feeding fresh olefins to the gas-phase polymerization vessel of fluid layer type, a supersonic wave flow meter is provided on the circulation line; the circulating-gas flow volume of the polymerization component-containing gas is determined by means of the supersonic wave flow meter; and the gas-velocity of the gas flow forming the fluid layer region in the gas-phase polymerization vessel of fluid layer type is controlled based on the determination result, thereby the linear gas-velocity can be controlled stably for a long time without a flow meter of differential pressure type and the circulating-gas volume can be determined stably for a long time with high good accuracy.

FIG. 1

a velocity reduction region
a thermometer
a manometer
a ultrasonic flowmeter
a heat exchanger
a blower
a differential pressure flowmeter

**Description**

BACKGROUND OF THE INVENTION

1. Field of the Invention

The present invention relates to a method for controlling gas-velocity in a gas-phase polymerization vessel and a process for the gas-phase polymerization, and more particularly, in performing the gas-phase polymerization of olefins in a gas-phase polymerization vessel, to a method for controlling the gas-velocity of a circulating-gas, which is circulated to the gas-phase polymerization vessel, and a process for the gas-phase polymerization wherein the gas-phase polymerization of olefins is carried out by means of the above method for controlling the gas-velocity.

The terms "polymerization" and "polymer" used in the present specification each mean "homopolymerization" or "copolymerization", and "homopolymer" or "copolymer", unless the meaning thereof is otherwise defined.

2. Description of the Related Art

Typical olefin polymers such as polyethylene, a linear low density polyethylene (LLDPE) which is a copolymer comprised of ethylene and $\alpha$-olefin may be used generally, for example, as a film-forming material.

An olefin polymer may be produced by using of Ziegler-type or Metallocene type catalyst.

Recently, since the improvement of transition metal catalyst for the polymerization of olefin remarkably increases productivity of olefin polymer per unit amount of transition metal, the removal of catalyst after the polymerization may have been omitted.

When such a highly active catalyst is used for the polymerization, the polymerization may be carried out easily so that a gas-phase process for the polymerization of olefin is generally adopted. In such a gas-phase polymerization, a fluid layer type gas-phase polymerization vessel in which there is provided a member called as a gas-distributing plate having a large number of holes is generally used to perform the gas-phase polymerization smoothly. Hereinafter a fluid layer type gas-phase polymerization vessel is reffered to as polymerization vessel.

For the polymerization vessel having a gas-distributing plate, an olefin or olefin-containing gas (hereinafter referred collectively to as "olefin and the like") is introduced through a conduit having a compressor or blower into the vessel from the lower portion thereof in general. The gas such as olefin and the like introduced into the polymerization vessel then ascends in the vessel while being distributed uniformly by means of gas-distributing plate. The gone-up olefin and the like that has ascended is flowed in the fluid layer region positioned above the gas-distributing plate in contact with catalyst particles, thereby the gas-phase polymerization is carried out in the polymerization vessel.

The performance of gas-phase polymerization forms an olefin polymer on the surfaces of catalyst particles. Subsequently, solid particles comprising catalyst particles and the olefin polymer are floated in the fluid layer region; that is, a polymer is obtained in the form of particle. Therefore, it is not necessary to carry out the precipitation of particles, separation of particles and so on after the polymerization so that the production process may be simplified.

The gas such as olefin and the like introduced into the polymerization vessel is not wholly subjected to the polymerization, and a so-called unpolymerized gas, which is not subjected to the polymerization, may be yielded. The unpolymerized gas is taken out as a gas containing polymerization component from the upper portion of polymerization vessel outward the vessel, cooled with a cooling water, brine or the like and then fed again into the polymerization vessel from the lower portion thereof by means of compressor or blower, whereby the reuse, so-called circulating use of unpolymerized gas is carried out. The circulation pipe for reusing the unpolymerized gas for the polymerization vessel is referred to as the circulation line.

To operate the polymerization vessel of such structure stably and efficiently for a long time, the following measures are required:

(1) To prevent the formation of heat spot in the fluid layer region as the polymerization region of gas-phase polymerization;
(2) To prevent the fusing of polymer particles in the fluid layer region;
(3) To prevent the formation of polymer particles which are not or hardly fluid.

As one of main operation factors in the polymerization vessel for operating the vessel stably and efficiently for a long time as mentioned above while performing these measures availably, it is exemplified to control suitably the gas-velocity, the so-called linear velocity of gas (hereinafter referred to as "linear gas-velocity") in the fluid layer region.

The linear gas-velocity is the quotient of volume velocity of gas flowing in the fluid layer region divided by the sectional area of the fluid layer region. When the temperature, pressure and sectional area of the fluid layer region are constant, the linear gas-velocity is determined by the total amount of the gas fed from the outside into the polymerization vessel and the circulating gas.

The main purpose for feeding the gas from the outside of the polymerization vessel is to supply the starting material consumed in the polymerization vessel. Further, the control of the volume of circulating gas (hereinafter referred to as "circulating-gas volume") plays an important role to control the linear gas-velocit0y to stabilize the fluid layer region.

Therefore, it is important to carry out the determination of circulating-gas volume with high accuracy. In the prior art, for the determination of circulating-gas volume, differential pressure type flow meter was used in which a throttle was provided in the piping of circulation line and the differential pressure between both ends thereof was determined to obtain the flow rate of circulating-gas.

## SUMMARY OF THE INVENTION

However, since finely divided polymer particles growing insufficiently in the polymerization system as well as finely divided particles being formed by the breakage of solid catalyst component during the polymerization are inevitably mixed in the circulating-gas, the determination of the circulating-gas by means of differential pressure type flow meter suffers from the following problems:

1) When a differential pressure flow meter of orifice or venturi type is used, the catalyst and polymer particles contained in the circulating-gas adhere to the orifice and venturi and they are apt to be blocked so that it may be difficult to determine stably the volume of the circulating-gas for a long time by means of a flow meter of differential pressure type;

2) When a differential pressure flow meter of orifice or V-cone type is used, the differential pressure in the orifice or V-cone portion is large and the power loss of a blower for circulating the circulating gas is apt to be large;

On the other hand, when the orifice or venturi is blocked by the adhesion of polymer particles, etc. in the case of the above differential pressure flow meter of orifice or venturi type, it is proposed to provide a by-pass line for the differential pressure flow meter to eliminate such problem. In this case, there is known a method in which the determination line of the differential pressure flow mater is closed in general and the by-pass line is closed while opening the determination line of the differential pressure type flow meter only in need of the determination of flow rate to thereby operate the differential pressure type flow meter.

Conversely, a method is also known in which the determination of flow rate in the circulation line by means of differential pressure flow meter is carried out while allowing the circulating-gas to pass and, when the differential pressure type flow meter is not stable, the by-pass line is opened to stop the inflow of the circulating-gas into the determination line and eliminate the blocking.

According to this method, however, the valve-switching operation for opening the by-pass line is complicated and the line containing combustible matters is necessary to be opened to clean the line so that it may be required to purge for a long time for preventing dangers or to equip a large number of personnel for performing the opening operation, which decreases the efficiency.

Further, the differential pressure flow meter has such a tendency that the more flow rate of the circulating-gas may need the higher cost.

Furthermore, it is impossible to prevent completely the reduction of accuracy in the determination of flow rate due to the adhesion of polymer particles and the like.

The present invention has been accomplished in view of the above-mentioned actual circumstances and a technical object thereof is to provide a method for controlling the gas-velocity in the gas-phase polymerization vessel, in which the volume of circulating-gas is determined stably for a long time with high accuracy and the linear gas-velocity is also determined stably for a long time, and to provide a process for the polymerization of olefins by using the above method for controlling the gas-velocity with forming a stable fluid layer region.

To attain the above-described object, the method for controlling the gas-velocity in the gas-phase polymerization and the process for gas-phase polymerization according to the present invention are structured as follows:

(1) In a gas-phase polymerization apparatus with olefins having a polymerization equipment using a gas-phase polymerization vessel of fluid layer type in which gas-phase polymerization is carried out with a solid catalyst component, a circulation line in which a polymerization component-containing gas taken out from a velocity-reduction region positioned in an upper portion of the gas-phase polymerization vessel of fluid layer type is turned back to the gas-phase polymerization vessel of fluid layer type to be circulated so as to be a circulating-gas and a feed line for feeding fresh olefins to the gas-phase polymerization vessel of fluid layer type, it is characterized that a supersonic wave flow meter is provided on the circulation line, the circulating-gas flow volume $Vc$ of the polymerization component-containing gas is determined by means of the supersonic wave flow meter, and the gas-velocity of gas flow forming the fluid layer region in the gas-phase polymerization vessel of fluid layer type is controlled based on the determination result of the circulating-gas volume;

(2) In the above-described item (1), an additional flow meter is provided on the feed line to determine the flow volume Vi of fresh olefin to be fed and the gas-velocity of the gas flow forming the fluid layer region in the gas-phase polymerization vessel of fluid layer type may be controlled based on the value obtained by adding the flow volume Vi to the circulating-gas volume Vc of the determination result;

(3) In the above-described item (2), temperature Tp and pressure Pp in the fluid layer region are determined; the gas-velocity in the fluid layer region is calculated from the circulating-gas volume Vc, the flow volume Vi of fresh olefin to be fed, the temperature Tp, the pressure Pp and the sectional area Af of the fluid layer region; the deviation of the calculated gas-velocity from the allowance range of gas-velocity (the allowance range of linear gas-velocity), which is one of predetermined polymerization conditions, is obtained; and preferably the gas-velocity of the gas flow forming the fluid layer region may be controlled by the deviation.

The linear gas-velocity x in the fluid layer region is calculated from the following equation by using following parameters: the temperature Tp and the pressure Pp in the fluid layer region, the flow volume Vc of circulating-gas, the flow volume Vi of fresh olefin to be fed and the sectional area Af of fluid layer region;

$$x = (Vi' + Vc) \cdot Z \cdot (Tp + 273) \cdot B/(273 \cdot (Pp + B) \cdot Af)$$

wherein

$$Vi' = Vi \cdot (Pp/P)^{1/2} \cdot (T/Tp)^{1/2}$$

P    : Design value of polymerization
T    : Design value of polymerization
B    : Atmospheric pressure
Z    : Compression coefficient of gas.

(4) As a method for controlling the gas-velocity of the gas flow forming the fluid layer region, in the above described item (1), the volume velocity of the circulating-gas may be controlled.

(5) As a method for controlling the gas-velocity of the gas flow forming the fluid layer region, in the above-described item (2) or (3), the volume velocity of the circulating-gas may be controlled.

(6) As a method for controlling the gas-velocity of the gas flow forming the fluid layer region, in the above-described item (5), it is characterized in that the volume velocity of the fresh olefin to be fed may be controlled.

(7) Preferably, the gas-phase polymerization of olefins is carried out by using the controlling methods described in the above items (1)-(6).

The present invention comprising the above mentioned structure provides the following effects: According to the method for controlling the circulating-gas in the gas-phase polymerization vessel of the present invention, the control of the circulating-gas may be carried out effectively by a simple and inexpensive apparatus by determining the flow volume of the circulating-gas by means of supersonic wave flow meter and controlling the velocity of the circulating-gas discharged from the gas-phase polymerization vessel based on the result from the determination of the flow volume. The gas-velocity of the flow comprising a gas containing finely divided particles, in which inter alia the particles are active and the gas itself is a compound reacting with the particles, may be controlled stably for a long time with keeping a little power loss.

The volume velocity of gas may be determined directly by means of supersonic wave.

Moreover, it is possible to omit the calculation step which is necessary for the control of the circulating-gas volume, resulting in a simpler control with high accuracy.

In addition, since even finely divided particles such as polymer particles does not block the determination portion of flow volume owing to use of the supersonic wave flow meter, the provision of the flow meter to the circulation portion of the circulating-gas containing finely divided particles such as polymer particle enables an accurate and stable determination for a long time.

Further, a larger power is not necessary because of a little differential pressure. Even a larger diameter of piping does not cause the enlargement of a device for determining the flow volume and the elevation of cost with, and effects as mentioned above can be obtained.

According to the process for the gas-phase polymerization of the present invention, a fluid layer region under a stable condition may be formed.

BRIEF DESCRIPTION OF THE DRAWINGS

The object and features of the present invention will become more apparent from the consideration of the following detailed description taken in conjunction with the accompanying drawings in which:

Fig.1 is a schematic view of a gas-phase polymerization apparatus in accordance with an embodiment; and
Fig.2 is a view showing the determination principle of a supersonic wave flow meter.

DESCRIPTION OF THE PREFERRED EMBODIMENTS

The embodiment according to the present invention will be illustrated based on the accompanying drawings hereinafter.

(Polymerization Vessel 1)

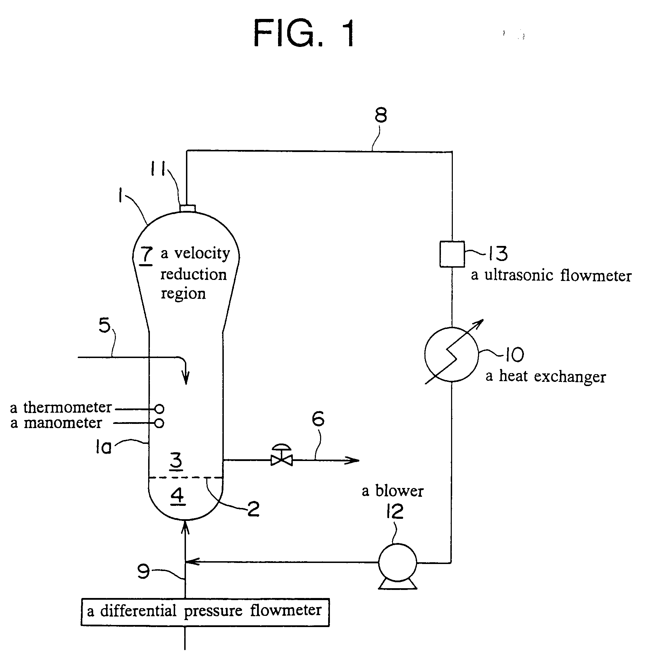

As shown in Fig.1, the polymerization vessel 1 has a straight trunk portion 1a extending downward in the form of test tube. A gas-distributing plate 2 is provided in the lower portion of the straight trunk portion 1a. The inner space of the polymerization vessel 1 is separated by the gas-distributing plate 2 to an upper and lower portions. Thus, a fluid layer region 3 in the upper portion and a gas-introducing region 4 in the lower portion in the polymerization vessel 1 are formed, separated by the gas-distributing plate 2. The gas-phase polymerization can be performed in the fluid layer 3.

The upper portion of the fluid layer region 3 in the polymerization vessel 1 is a velocity reduction region 7 in which the flow rate of the gas contained in the polymerization vessel 1 is reduced to prevent the flying-out of particles from the polymerization vessel 1.

A catalyst feed pipe 5 for feeding the catalyst to the polymerization vessel 1 is connected nearly to the center portion of the fluid layer region 3 of the polymerization vessel 1 and a polymer discharging pipe 6 for discharging the formed polymer out of the polymerization vessel 1 is connected to the lower portion of the fluid layer region 3. An exhaust opening 11 is provided to the top of the polymerization vessel 1 and a gas-circulating pipe 8 for circulating the gas from the polymerization vessel 1 is connected to the exhaust opening 11.

The catalyst feed pipe 5 may be arranged in the vicinity of the gas-distributing plate 2.

A solid catalyst and a catalyst component of organometallic compound or, if necessary, other compounds such as an electron donar are fed through the catalyst feeding pipe 5 from the outside of the polymerization vessel 1 to the polymerization vessel 1. The solid catalyst component is fed in the form of dried solid powder or in the form of suspension in a hydrocarbon to the polymerization vessel 1. The pre-polymerization of olefin may be carried out by using a catalyst component of orgnometallic compound or, if necessary, an electron donar. Every compound is fed with the pre-polymerization catalyst to the polymerization vessel 1.

To the gas-introducing region 4 defined by the gas-distributing plate 2 in the lower portion of the polymerization vessel 1, is connected a gas-feeding pipe 9 for feeding an olefin to be polymerized or, if necessary, a gas containing an impolymerizable low-boiling hydrocarbon and an inert gas together with the olefin to the polymerization vessel 1. Accordingly, the gas-introducing region 4 is called also as a gas chamber. The gas introduced into the gas-introducing region 4 through the gas-feeding pipe 9 flows then through the gas-distributing plate 2 into the fluid layer region 3 and is subjected to the gas-phase polymerization while flowing in the fluid layer region 3, which may be stirred by means of a mechanical means (not shown). As stirring means, there may be applied varied kinds of stirrers such as those of anchor, screw and ribbon type.

A supersonic wave flow meter 13, a heat exchanger 10 and a blower 12 are arranged in this order on the way of the gas-circulating pipe 8, and the circulating gas entering from the gas exhaust opening 11 through these members into the gas-circulating pipe 8 is circulated through the gas-feeding pipe 9 in the gas-introducing region 4. The circulation line comprises the gas-circulating pipe 8 having at least on the way the supersonic wave flow meter 13 and a portion of the gas-feeding pipe 9.

The circulating gas from the polymerization vessel 1 passes through the gas-circulating pipe 8 and is cooled in the heat exchanger 10. The heat of polymerization contained in the exhaust gas is removed through the cooling, where the exhaust gas may be cooled within the range not so as to destroy the stability of the fluid layer region 3 until a liquid condensate is formed from a part of the exhaust gas. The circulating gas after cooling by the heat exchanger 10 is separated if necessary into a liquid condensate and a gas. After the separation, the gas is circulated from the circulating pipe 8 through the blower 12 to the gas-introducing region 4 by means of a pump (not shown).

The circulating gas cooled by the heat exchanger 10 is introduced together with a fresh gas, which is fed newly from the outside of the polymerization vessel 1 through the gas feeding pipe 9 composing the feeding line, into the gas-introducing region 4 to form the fluid layer region 3. The liquid condensate may be fed through the other piping (not shown) other than the circulating pipe 8 to the polymerization vessel 1, where an olefin and/or impolymerizable low-boiling hydrocarbon is generally gaseous and fed into the polymerization vessel 1 in such a flow volume that the fluid layer region 3 may be maintained in a fluid condition. Particularly, when the minimum fluidization rate is defined as Umf, the flow rate of the olefin and/or impolymerizable low-boiling hydrocarbon is preferably about 3-50 Umf. The Umf is defined as the linear gas-velocity which is the quotient obtained by dividing the volume velocity of the gas through the fluid layer region 3 by the sectional area of the fluid layer region 3. Preferably, the linear gas-velocity in the fluid layer region 3 is controlled within the range of from 10 cm/sec to 200 cm/sec based on the linear gas-velocity of the circulating gas determined by the supersonic wave flow meter 13 or the total value of the linear gas-velocity of the circulating gas plus the linear gas-velocity of fresh olefin to be fed. The fluid layer region 3 is formed stably at a linear gas-velocity within the range, so that the gas flow in the fluid layer region 3 may be controlled by the determination of the flow rate of the circulating gas under a stable condition by means of a supersonic wave flow meter 13 and the more stable polymerization of olefin may be carried out.

When the temperature, pressure and sectional area are constant in the fluid layer region 3, the linear gas-velocity is determined by the gas volume of the gas blowing from the gas-introducing region 4, i.e. by the sum of the volume velocity of the gas flow being fed newly from the gas feeding pipe 9 and the volume velocity of the gas flow being circulated from the circulating pipe 8 into the polymerization vessel 1. The gas component of the gas flow being fed newly from the gas feeding pipe 9 is used mainly for the supplement of olefins which are consumed in the polymerization vessel 1. The volume of the fed gas is less than that of the circulating gas, so that it is important to control the volume velocity of the gas being fed from the circulating line to the gas introducing region 4.

However, the gas in the circulating line may contain even a little amount of polymer in the form of powder, so that it may be difficult to carry out the stable determination by means of a flow meter such as that of differential pressure type.

In the embodiment according to the present invention, the flow volume of the gas containing such polymer in the form of powder is determined for a long time with high accuracy and the circulating gas is controlled preferably based on the result of determination. In the embodiment according to the present invention, the flow volume Vc of the circulating gas is determined by a supersonic wave flow meter 13 provided in the circulating pipe 8 to control the gas-velocity for the formation of the fluid layer region 3.

The control of the gas-velocity for the formation of the fluid layer region 3 is carried out by controlling the volume velocity of the circulating gas. Further, the linear gas-velocity in the gas-phase polymerization vessel 1 is controlled preferably by controlling also the volume velocity of fresh olefin to be fed.

The present invention will be described in more detail hereinunder. The polymerization vessel 1 comprises a storing means of the circulating gas flow volume for storing as the output signal the determination result of the flow volume Vc of the circulating gas by means of a supersonic wave flow meter 13; a memory means of the feed gas flow volume for outputting the signal corresponding to the feed gas flow volume Vi (the flow volume of olefin) in the feeding line 9 and storing the feed gas flow volume Vi; a temperature determination output means for determining the temperature Tp in the fluid layer region 3 and outputting the determination result; a pressure determination output means for determining the pressure Pp in the fluid layer region and outputting the determination result; and a detection means of the linear gas-velocity deviation for calculating the linear gas-velocity in the fluid layer region 3 from the circulating gas flow volume Vc, the feed gas flow volume Vi, the temperature Tp in the fluid layer region, the pressure Pp in the fluid layer region and the sectional area Af of the fluid layer region 3 and detecting the deviation between the calculated linear gas-velocity and the allowance range of linear gas-velocity, which is one of predetermined polymerization conditions; whereby the circulating gas volume in the circulating pipe 8 is controlled by outputting as a signal the detection result from the detection means of the linear gas-velocity deviation.

By operating as mentioned above, the flow volume of the gas entering through the gas-feeding pipe 9 into the fluid layer region 3 may be calibrated exactly and the flow volume of gas entering through the circulating pipe 8 into the fluid layer region 3 may be determined exactly by means of a supersonic wave flow meter 13, so that the linear gas-velocity in the fluid layer region 3 can be known exactly by means of the supersonic wave flow meter 13.

To obtain the linear gas-velocity definitely, the following equation (1) is preferably adopted by using parameters: the temperature Tp in the fluid layer region, the pressure Pp in the region, the circulating gas flow volume Vc, the flow volume Vi of the fresh olefin to be fed in the vessel 1 and the sectional area Af of the fluid layer region.

$$X = (Vi' + Vc) \cdot Z \cdot (Tp + 273) \cdot B/(273 \cdot (Pp + B) \cdot Af) \tag{1}$$

wherein

$$Vi' = Vi \cdot (Pp/P)^{1/2} \cdot (T/Tp)^{1/2}$$

P     : Design value of polymerization
T     : Design value of polymerization
B     : Atmospheric pressure

Z    : Compression coefficient of gas.

(Method for Controlling Gas-Velocity)

In order to control the linear gas-velocity in the fluid layer region 3, the flow volume of the circulating gas occupying dominantly the gas entering into the fluid layer region 3 may be controlled. For this purpose, there are a method for varying the rotation number of the blower 12 provided to the circulating pipe 8, a method for adjusting a section of the inlet of the blower 12 as a part of the flow passage by an orifice (not shown) which can open and shut the inlet and is arranged at the vicinity of the inlet of the blower 12, or a method in which both of the above methods are carried out simultaneously. In this case, the rotation number of the blower or the orifice is adjusted in such manner that the linear gas-velocity obtained by the supersonic wave flow meter 13 may approach to a suitably given velocity.

To improve the calculation accuracy of the linear gas-velocity, the gas is sampled from the circulating gas pipe 8, the composition of gas is determined automatically or manually by means of a gas-chromatography and the result thereof is inputted into the calculation means, otherwise the operation may be carried out wholly or partially automatically.

When not only the circulating gas but the fresh gas to be fed is controlled, the blower or orifice (both are not shown) provided in the gas-feeding pipe 9 may be controlled in the same manner as mentioned above.

(Supersonic Wave Flow Meter 13)

A supersonic wave flow meter 13 may be used, by which the flow volume can be determined with an error within 5%. According to the supersonic wave flow meter, the flow volume is determined by a phase difference method or a propagation velocity method and the supersonic wave flow meter using the propagation velocity method is exemplified because it has a high determination accuracy and inexpensive.

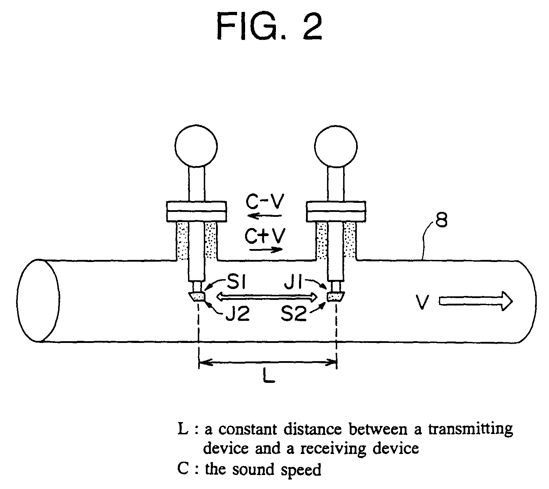

The propagation velocity of a supersonic wave is affected by the flow rate of the fluid in which the supersonic wave is propagated. When the sound speed in a fluid of a static condition is represented as C and the propagation direction of supersonic wave in a fluid having a flow velocity V is the direction along the flow of the fluid (the direction is called as the order direction), the propagation velocity is represented as C + V; When the propagation direction of supersonic wave in the circulating pipe 8 is adverse to the order direction as shown in Fig.2, the propagation velocity is represented as C-V.

Now, two pairs of transmitting and receiving devices (S1 and J1, S2 and J2) are arranged at a constant distance L and the one sound wave is discharged from the transmitting device S1 in the order direction and the other sound wave from the transmitting device S2 in the adverse direction. When the time required for receiving the sound wave from the transmitting device S1 or S2 by the receiving device J1 or J2 is represented as t1 or t2 respectively, the time t1 or t2 can be shown as $t1=L/(C+V)$ or $t2=L/(C-V)$ respectively. Since the sound speed C and the distance L each are constant, the value V can be obtained from the difference of time t1 and t2. The value V means the linear gas-velocity and the volume velocity of the circulating gas as a fluid can be obtained from the value V and the sectional area of the circulating gas line. The integration of the volume velocity within a given time interval may provide the flow volume of the circulating gas in the time interval.

Preferably, the supersonic wave flow meter 13 is provided upstream the heat exchanger 10 as a cooler because an occasional formation of condensate from the circulating gas and mists therefrom in the heat exchanger 10 does not affect adversely the supersonic wave flow meter 13.

(Gas-Distributing Plate 2)

A number of gas-passing holes (not shown) are formed in the shape of concentric circles on the gas-distributing plate 2, which is used in the polymerization vessel 1 having the fluid layer, and the gas flows through these many gas-passing holes from the gas-introducing region 4 into the fluid layer region 3.

(Overcap of Gas-Distributing Plate 2)

A so-called overcap that covers the gas-passing holes from above is generally provided on the gas-passing holes of the gas-distributing plate 2. Although the drawing of the overcap is omitted, the provision of overcap above the gas-passing holes may prevent the invasion of polymer in the form of powder, which falls from the fluid layer region 3, into the gas-passing holes. The overcap is arranged in such manner that a rotary stream may be formed directing in the same direction along the concentric circles of the gas-passing holes in a shape (e.g. V-shape) spreading toward the discharge side of the gas flow from the overcap.

(Polymerization Condition)

As olefins to be used for the gas-phase polymerization of olefin in the polymerization vessel 1 having the gas-distributing plate 2, $\alpha$-olefins of 2 - 18 carbon atoms are preferred. Examples of such olefins include ethylene; propylene, 1-butene, 1-penten, 1-hexene, 4-methyl-1-penten, 3-methyl-1-penten, 1-heptene, 1-octene, 1-nonene, 1-decene, 1-undecene, 1-dodecene, 1-tetradecene, 1-hexadecene, 1-octadecene, isoprene, 1,4-hexadiene, butadiene and the like. Further, there are mentioned cyclopentene, cycloheptene, norbornene, 5-methyl-2-norbornene, dicyclopentadiene, 5-ethylidene-2-norbornene, tetracyclododecene, 2-methyl-1,4,5,8-dimethano-1,2,3,4,4a,5,8,8a-octahydronaphthalene, styrene, vinylcyclohexane and the like.

These olefins are used alone or in combination thereof within the range being capable of the gas-phase polymerization.

In general, the homopolymerization of ethylene or propylene and the copolymerization ethylene or propylene and other olefins used.

For the purpose of adjusting the molecular weight and so on of the polymers, a hydrogen gas may be used together with the olefins.

The polymerization condition in the polymerization according to the present invention may be-varied depending on the kinds of olefins to be used and the fluid condition of the polymerization system (fluid layer region) 3 and is generally at a polymerization temperature of 20 - 200 °C under a polymerization pressure of 1 - 100 Kg/cm$^2$.

(Polymerization Catalyst)

The catalysts to be used are not particularly limited and those containing catalyst components of transition metal compounds are preferred. The catalyst components of transition metal compounds are the compounds of transition metal such titanium, vanadium, chromium and zirconium and both liquid and solid catalysts may be used depending on the use condition. These catalysts are not necessarily single compounds and they may be carried on other compounds or homogeneous mixtures with other compounds or complex or double compounds with other compounds. The catalysts containing catalyst components of such transition metal compounds are catalysts of Ziegler-Natta or metallocene type known as they are.

The catalysts of metallocene type will be described hereinunder.

The solid catalysts of IVB group metallocene type to be used in the present invention are formed from (A) a IVB group transition metal compound containing a ligand having the cyclopentadienyl skeleton, (B) an organoaluminum oxy compound and (C) a particulate carrier. The IVB group transition metal compound containing a ligand having the cyclopentadientl skeleton (A) (hereinafter occasionally referred to as metallocene compound (A)) to be used in the present invention is represented by the formula (I)

$$MLx \qquad\qquad\qquad (I)$$

wherein M is a transition metal atom of IVB group and for example zirconium, titanium and hafnium, L is a ligand coordinating with the transition metal atom, at least one of L is a ligand containing a ligand having the cyclopentadienyl skeleton and L other than a ligand containing a ligand having the cyclopentadienyl skeleton is a hydrocarbon group of 1 - 12 carbon atoms, an alkoxy group, an aryloxy group, a trialkylsilyl group, SO3R3 group (R3 is hydrocarbon group of 1 - 8 carbon atoms which may have a substituent such as halogen), a halogen atom or a hydrogen atom, x is the valence of the transition metal atom.

## Claims

1. In a gas-phase polymerization apparatus with olefins having a polymerization equipment using a gas-phase polymerization vessel 1 of fluid layer type in which gas-phase polymerization is carried out with a solid catalyst component, a circulation line 8 in which a polymerization component-containing gas taken out from a velocity-reduction region 7 positioned in an upper portion of said gas-phase polymerization vessel 1 of fluid layer type is turned back to said gas-phase polymerization vessel 1 of fluid layer type to be circulated so as to be a circulating-gas, and a feeding line 9 for feeding fresh olefins to said gas-phase polymerization vessel 1,

    a method for controlling the gas-velocity in the gas-phase polymerization vessel characterized by providing a supersonic wave flow meter 13 on said circulation line, determining the circulating-gas flow volume Vc of said polymerization component-containing gas by means of said supersonic wave flow meter 13, and controlling the gas-velocity of the gas flow forming the fluid layer region 3 in said gas-phase polymerization vessel 1 of fluid layer type based on the determination result of the circulating-gas flow volume.

2. A method for controlling the gas-velocity in the gas-phase polymerization vessel as claimed in claim 1, characterized by providing an additional flow meter to said feeding line to determine the flow volume Vi of the fresh olefin to be fed and controlling the gas-velocity of the gas flow forming the fluid layer region in said gas-phase polymerization vessel of fluid layer type based on the value obtained by adding the flow volume Vi to said circulating-gas flow volume Vc of the determination result.

3. A method for controlling the gas-velocity in the gas-phase polymerization vessel as claimed in claim 2, characterized by determining the temperature Tp and pressure Pp in said fluid layer region, calculating the gas-velocity in said fluid layer region from said circulating-gas volume Vc determined by means of the supersonic wave flow meter 13, the flow volume Vi of fresh olefin to be fed, said temperature Tp, said pressure Pp and the sectional area Af of said fluid layer region, obtaining deviation of the calculated gas-velocity from the allowance range of gas-velocity, which is one of predetermined polymerization conditions, and controlling the gas-velocity of the gas flow forming the fluid layer region by the deviation.

4. A method for controlling the gas-velocity in the gas-phase polymerization vessel as claimed in claim 1, characterized by controlling the volume velocity of said circulating-gas to control the gas-velocity of the gas flow forming the fluid layer region.

5. A method for controlling the gas-velocity in the gas-phase polymerization vessel as claimed in claim 2 or 3, characterized by controlling the volume velocity of said circulating-gas to control the gas-velocity of the gas flow forming the fluid layer region.

6. A method for controlling the gas-velocity in the gas-phase polymerization vessel as claimed in claim 5 characterized by controlling the volume velocity of the fresh olefin to be fed to control the gas-velocity of the gas flow forming the fluid layer region.

7. A process for the gas-phase polymerization characterized by performing the gas-phase polymerization of olefins by using a method for controlling the gas-velocity as claimed in claims 1, 2, 3, 4, 5, and 6.

# FIG. 1

# FIG. 2

L : a constant distance between a transmitting
   device and a receiving device
C : the sound speed

**European Patent Office**

## EUROPEAN SEARCH REPORT

Application Number

EP 98 11 2887

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 124 333 A (BABCOCK & WILCOX CO) 7 November 1984 * page 4, line 35 - page 5, line 36; figure 1 * * page 6, line 35 - line 37 * * claims 1-10 * | 1,2,5 | B01J8/24 C08F2/00 C08F2/34 C08F10/00 G05D7/00 |
| A | GB 831 979 A (PHILLIPS PETROLEUM COMPANY) 6 April 1960 * page 1, line 40 - line 54 * * page 1, line 65 - page 2, line 126; figure 1 * * claim 14 * | 1,2,5 | |
| A | US 3 998 995 A (BUSS RUSSEL A ET AL) 21 December 1976 * the whole document * | 1 | |

TECHNICAL FIELDS SEARCHED (Int.Cl.6)

C08F
B01J
G05D

The present search report has been drawn up for all claims

| Place of search | Date of completion of the search | Examiner |
|---|---|---|
| THE HAGUE | 29 October 1998 | Gamb, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document